(19) **Europäisches Patentamt**
**European Patent Office**
**Office européen des brevets**

(11) **EP 4 738 818 A1**

(12) **EUROPEAN PATENT APPLICATION**

(43) Date of publication:
06.05.2026 Bulletin 2026/19

(21) Application number: **24306849.1**

(22) Date of filing: **31.10.2024**

(51) International Patent Classification (IPC):
*H04N 19/117* (2014.01) *H04N 19/82* (2014.01)

(52) Cooperative Patent Classification (CPC):
**H04N 19/117; H04N 19/82**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS 75017 Paris (FR)**

(72) Inventors:
• **BORDES, Philippe**
  **35890 LAILLE (FR)**
• **BOISSON, Guillaume**
  **35137 PLEUMELEUC (FR)**
• **GALPIN, Franck**
  **35235 THORIGNE-FOUILLARD (FR)**
• **LEFEBVRE, Frederic**
  **35000 RENNES (FR)**

(74) Representative: **Vossius & Partner Patentanwälte Rechtsanwälte mbB Siebertstraße 3 81675 München (DE)**

(54) **ADAPTIVE LOOP FILTER RESIDUALS SCALING WITH OPTIMAL INITIALIZATION**

(57) Systems, methods, and/or instrumentalities are disclosed herein for a device that may be related to adaptive loop filter residual scaling with optimal initialization. In examples, a device may include a processor. The device may determine a correction of a reconstructed picture sample. The device may determine a classification associated with the reconstructed picture sample. The device may, based on the classification, determine a first scaling parameter. The device may determine a second scaling parameter based on the first scaling parameter. The device may generate a scaled correction based on the second scaling parameter and the correction. The device may apply the scaled correction to the reconstructed picture sample.

**FIG. 13**

## Description

### BACKGROUND

The present application is related to video coding systems that may be used to compress digital video signals, e.g., to reduce the storage and/or transmission bandwidth needed for such signals. Video coding systems may include, for example, block-based, wavelet-based, and/or object-based systems.

### BRIEF SUMMARY

Systems, methods, and instrumentalities are disclosed related to adaptive loop filter (ALF) residuals scaling with optimal initialization. A device for video decoding may include a processor. The device may determine a correction of a reconstructed picture sample. The device may determine a classification associated with the reconstructed picture sample. The device may, based on the classification, determine a first scaling parameter. The device may determine a second scaling parameter based on the first scaling parameter. The device may generate a scaled correction based on the second scaling parameter and/or the correction. The device may apply the scaled correction to the reconstructed picture sample.

The device may include one or more features. For example, the device may receive a plurality of scaling parameters and/or a plurality of coefficients in an adaptation parameter set (APS). The first scaling parameter may be a scaling parameter of the plurality of scaling parameters in the APS. The correction may be determined based on at least one of the plurality of coefficients in the APS. The device may receive a scaling parameter reuse indication configured to indicate whether to reuse a plurality of previous scaling parameters. The device may determine that an updated scaling parameter has not been received in a previous slice header. The device may, based on the scaling parameter reuse indication and/or the determination that an updated scaling parameter has not been received, set a second scaling parameter correction index to a default value. The second scaling parameter may be determined further based on the second scaling parameter correction index.

The device may receive a scaling parameter reuse indication configured to indicate whether to reuse a plurality of previous scaling parameters. The device may determine that an updated scaling parameter has not been received in a previous slice header. The device may, based on the scaling parameter reuse indication and/or the determination that a scaling parameter has not been received, set a scaling parameter correction index to a default value. The first and/or second scaling parameter may be determined further based on the scaling parameter correction index. The device may determine to use a scaling parameter associated with an APS. The device may set the second scaling parameter to a value of the first scaling parameter. The first scaling parameter may be determined further based on an indication in the APS.

The device may receive, in video data, an updated scaling parameter indication. The second scaling parameter may be determined based on the updated scaling parameter indication and/or the first scaling parameter. The device may receive, in video data, an updated scaling parameter indication. The device may determine an updated scaling parameter based on the updated scaling parameter indication. The second scaling parameter may be set to the updated scaling parameter.

The device for video encoding may include a processor. The device may determine a correction of a reconstructed picture sample. The device may determine a classification associated with the reconstructed picture sample. The device may determine a first scaling parameter based on the classification. The device may determine a second scaling parameter based on the first scaling parameter. The device may include, in video data, an indication of the second scaling parameter. The device may generate a scaled correction based on the second scaling parameter and/or the correction. The device may apply the scaled correction to the reconstructed picture sample.

The device may include one or more features. For example, the device may derive a plurality of scaling parameters and/or a plurality of coefficients for an APS. The first scaling parameter may be a scaling parameter of the plurality of scaling parameters for the APS. The correction may be determined based on at least one of the plurality of coefficients for the APS. The device may include, in video data, a scaling parameter reuse indication configured to indicate whether to reuse the a plurality of previous scaling parameters based on a determination to set a second scaling parameter correction index to a default value. The device may include, in video data, a scaling parameter reuse indication configured to indicate whether to reuse a plurality of previous scaling parameters based on a determination to set a scaling parameter correction index to a default value. The device may determine to set the second scaling parameter to a value of the first scaling parameter. The device may send, in video data, an updated scaling parameter indication configured to indicate to use a scaling parameter based on the indication in the APS. The device may send, in video data, an updated scaling parameter indication. The second scaling parameter may be determined based on the updated scaling parameter indication and/or the first scaling parameter. The device may generate an updated scaling parameter indication. The updated scaling parameter indication may indicate that the second scaling parameter is set to an updated scaling parameter. The device may send, in video data, the updated scaling parameter indication.

In examples, a device for video decoding may include a processor. The device may be configured to determine a correction of a reconstructed picture sample. The device may determine a classification associated with the reconstructed picture sample. The device may determine a first scaling parameter based on the classification and/or a scaling parameter indication associated with the classification (e.g., in an APS). The device may determine, for a coding tree unit (CTU) whether to use the first scaling parameter. The device may, based on a determination to not use the first scaling parameter for the CTU, determine a second scaling parameter (e.g., based on at least one of an updated scaling parameter indication, an updated scaling parameter correction index, an updated scaling parameter, and/or the first scaling parameter). The device may generate a scaled correction based on the second scaling parameter and/or the correction. The device may apply the scaled correction to the reconstructed picture sample. In examples, a device for video encoding may include a processor.

The device may be configured to determine a correction of a reconstructed picture sample. The device may determine a classification associated with the reconstructed picture sample. The device may determine a first scaling parameter based on the classification and/or a scaling parameter indication associated with the classification (e.g., in an APS). The device may determine, for a CTU, whether to use the first scaling parameter. The device may, based on a determination to not use the first scaling parameter for the CTU, determine a second scaling parameter for the CTU. The device may determine an indication of a second scaling parameter (e.g., based on at least one of an updated scaling parameter indication, an updated scaling parameter correction index, an updated scaling parameter, and/or the first scaling parameter). The device may include, in video data, the indication of the second scaling parameter. The device may generate a scaled correction based on the second scaling parameter and the correction. The device may apply the scaled correction to the reconstructed picture sample. In examples, if the encoder determines to use the scaling parameter in the APS, then the indication of the second scaling parameter may be bypassed, and/or the scaling parameter may be the default value (e.g., the default for stage-1).

In examples, a video encoding/decoding method may include one or more features as described herein. Video data comprising information representative of the current video block may be encoded in accordance with one or more features as described herein. A computer program product stored on a computer readable medium and comprises program code instructions for implementing the steps of a method as described herein when executed by a processor.

## BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.

FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 is a flowchart illustrating an example process for classified-based post-filtering.
FIG. 5 is an example of an adaptive loop filter (ALF) filter shape including 40 taps.
FIG. 6 is a flow diagram illustrating an example of an ALF with re-scaling.
FIG. 7A-7B is a flow diagram illustrating an example of classification-based post-filter re-scaling for ALF.
FIG. 8 is an a flow diagram illustrating an example of one or more stages for derivation for ALF coefficients and/or scaling parameters associated with an encoder.
FIGS. 9A-9B are a flow diagram illustrating an example of determining one or more scaling parameters associated with an ALF for an encoder.
FIG. 10 is a table illustrating example scaling values obtained by cascading scaling parameters.
FIG. 11 is a table illustrating example of LUT values based on multiple LUTs.
FIG. 12 is a table illustrating approximated scaling parameters based on cascading scaling values obtained with a second LUT.
FIG.13 is a flow diagram illustrating an example of decoding of a bitstream with three coded images.
FIG. 14 is an flow diagram illustrating an example of a multiple stage derivation for ALF coefficients and/or scaling parameters for a decoder.
FIGS. 15A-15B are a flow diagram illustrating an example of determining scaling parameters associated with an ALF for a decoder.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

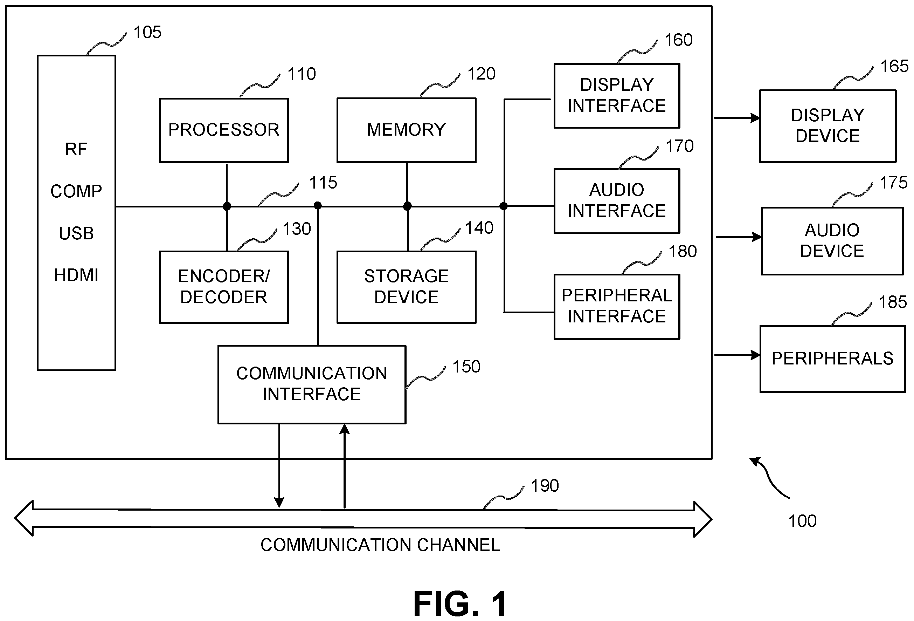

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

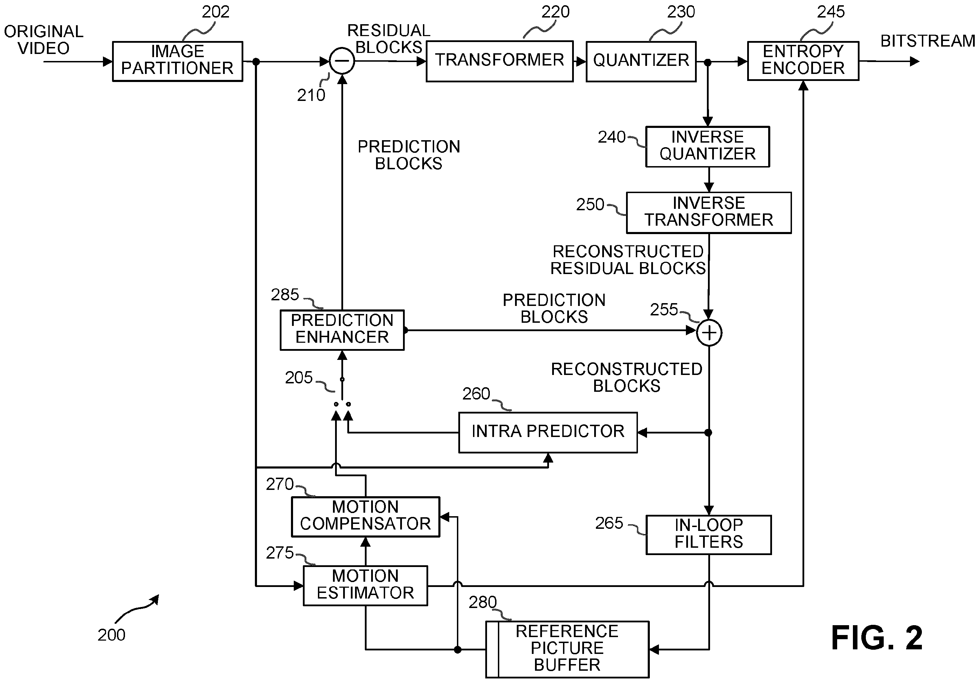

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

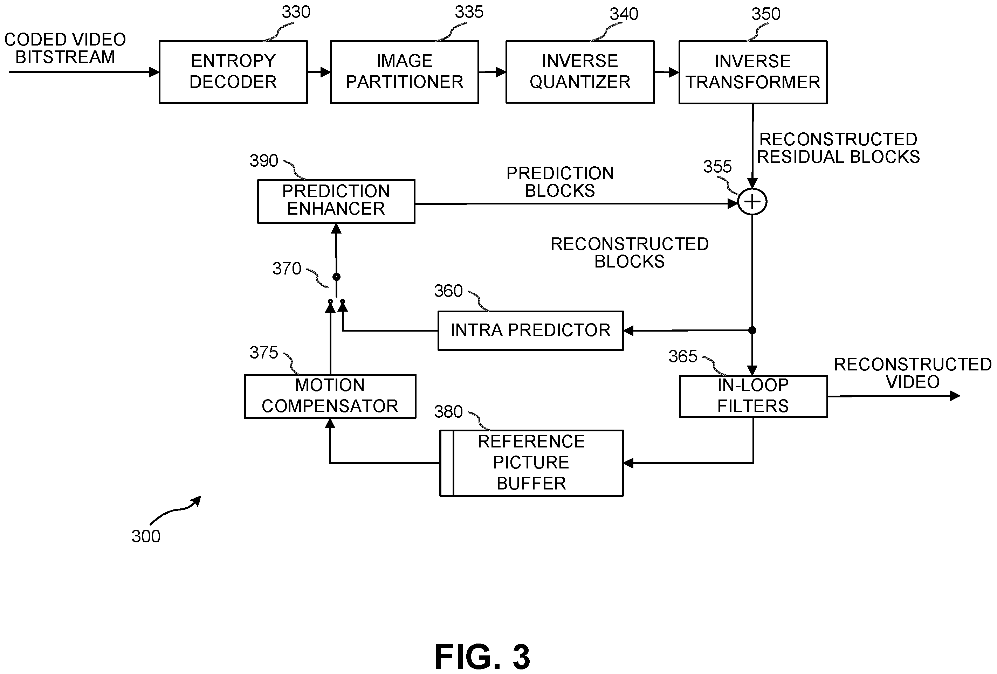

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, $Y,$ and chroma components, $U$ and $V$ (also denoted herein by $C, Cb, Cr$).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

In-loop post-filtering may be implemented by video codecs. A reconstructed picture may be enhanced with post-filtering. The post-filtering stage may be referred to as in-loop, for example, if/when the filtered pictures may be stored in the decoded picture buffer (DPB) to be used as inter-prediction.

In some examples, post-filtering may use additional data, e.g., also known as filter parameters, such as linear filter coefficients, sample offsets, etc., that may be implicit (e.g., pre-defined values that may be known at the decoder side), e.g., also known as fixed filters, or explicit (e.g., values coded in the bitstream), e.g., also known as non-fixed or adaptive filters or sample adaptive offsets.

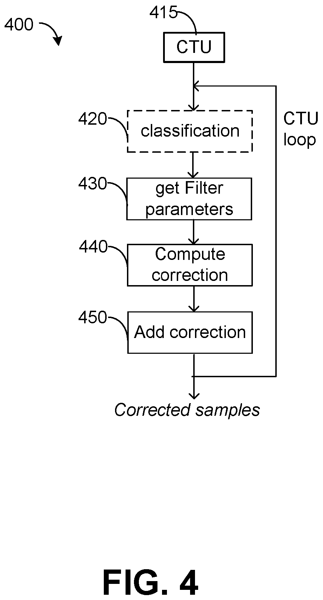

FIG. 4 is a flowchart illustrating an example process 400 for classified-based post-filtering. In some examples (e.g., as shown in FIG. 4), picture samples (e.g., 415) may be classified (420) into N classes $Cl_{i=0,..N-1}$. A set of N filter parameters $P_{i=0,..N-1}$ may be selected (e.g., implicit case) or coded in the bitstream (e.g., explicit case)(e.g. ALF parameters coded in adaptive parameter set, APS). A (e.g., each) sample classified as $Cl_k$ may be filtered with filter parameter $P_k$

A post-filtering process may compute (e.g., for each reconstructed sample) a correction (440) to be added (450) to the reconstructed samples. In case of classification-based filtering, a correction may be based on the parameters (430) associated with a class (420) of the sample.

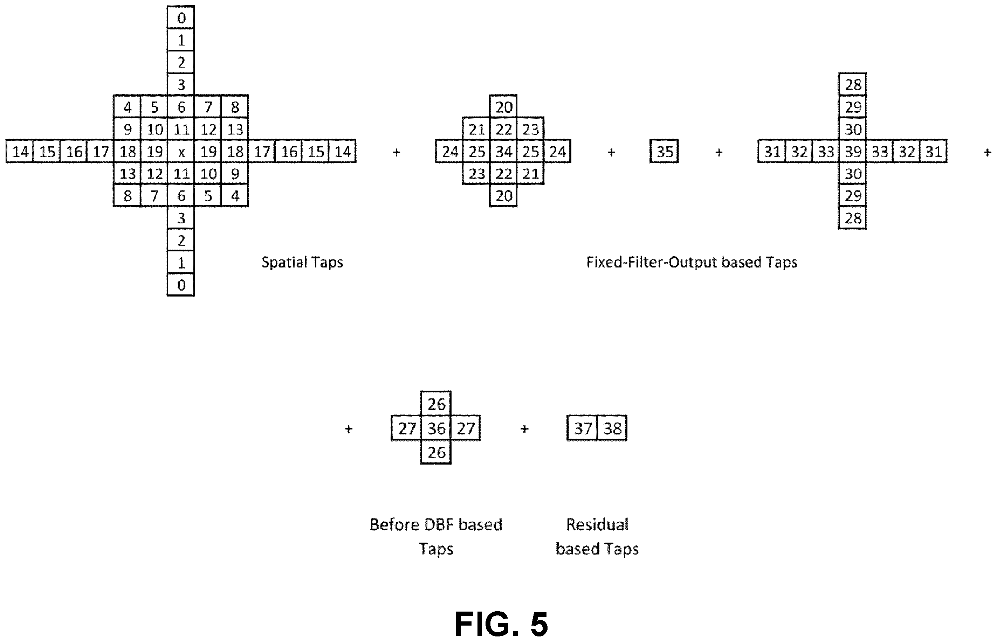

FIG. 5 is an example of a ALF shape including 40 taps. An ALF and/or cross component-ALF (CC-ALF) filter may be described herein. An ALF may classify the reconstructed samples (e.g., luma and/or chroma) into one or more classes. A class index ($Cl_k$) (k=0... N-1) may be associated with a (e.g., each) reconstructed sample. A set of filter parameters $P_k$ may be associated with a (e.g., each) class index. $P_k = \{c_{k,i}\}_{i=0,...n}$ may be the filter coefficients derived by the encoder.

In examples, let R(x,y) be an output sample of the decoding stage preceding ALF (e.g., a sample at position (x,y) being output by combination of SAO, CC-SAO and/or a BIF. The ALF output $\tilde{R}(x, y)$ may be:

$$\tilde{R}(x,y) = R(x,y) + Corr(x,y) = R(x,y) + \sum_{i=0}^{n} c_{k,i}f_i(x,y) \qquad (1)$$

Where $c_{k,i}$ may be an $i$-th coefficient for the samples classified as in $k^{th}$ class ($Cl_k$), and/or $f_i(x, y)$ may be an i-th tap for position ($x$, $y$). For samples (e.g., luma samples), an ALF may include the filtering shape depicted in FIG. 5 (e.g., with 40 taps). As illustrated in FIG. 5, the first 20 taps (taps 0-19) may be samples in the neighboring pixels (e.g., spatial taps). The other taps (e.g., taps 20-39) may include more a complex nature, may include taps based on the output of the fixed filters, may include taps based on the input for DBF, and/or may include taps based on the reconstructed residuals.

One or more (e.g., several) classifiers may be used. The type of classifier may be signaled in video data (e.g., the bitstream). For example, an ALF with non-fixed filters may use a Laplacian or a band classifier. In examples, (e.g., other) reconstructed sample-based data may be used for classification, (e.g., such as residual samples).

The band classifier may classify a reconstructed sample (e.g., the luma reconstructed samples) into (e.g., equally spaced) bands between 0 and 1<<bitdepth, (e.g., where bitdepth is the integer bit depth representation of a (e.g., one) reconstructed sample data. A residual classifier may derive the classes with the absolute of residual values. The Laplacian classifier may use local gradients to derive dominant direction and/or activity to derive the classes.

Coding of non-fixed ALF coefficients may be described herein (e.g., as part of routine 600).

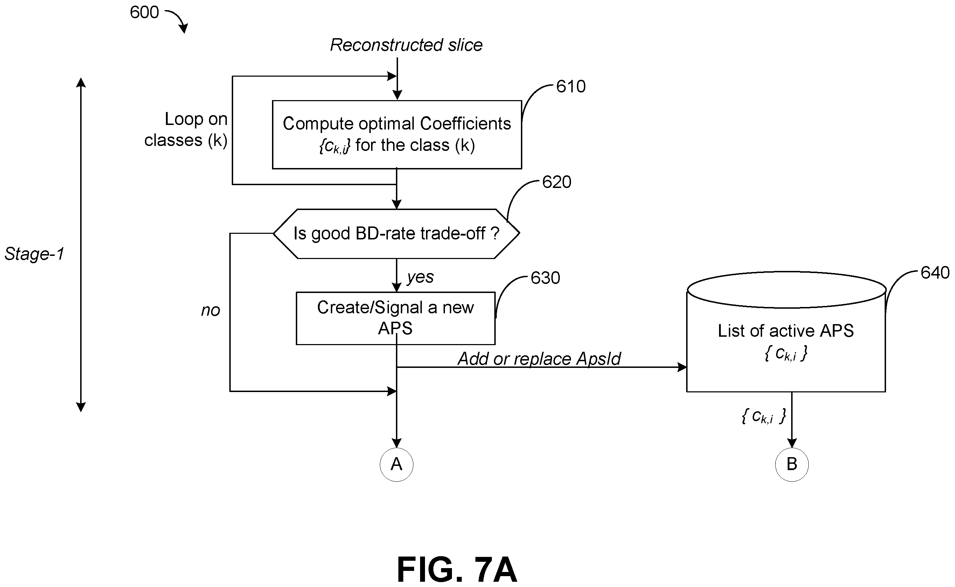

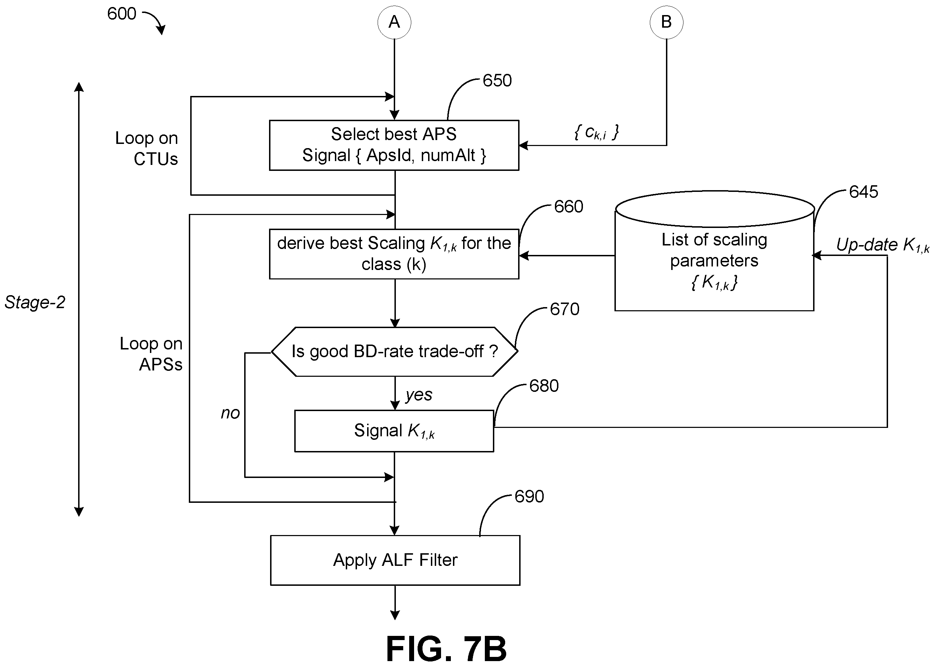

The following may be described with reference to FIG. 7A-7B. As part of stage-1 as illustrated in FIG. 7A, the non-fixed coefficients of ALF may be derived for a (e.g., one) frame (610). The non-fixed coefficients may be optimal in terms of BD-rate (620). The non-fixed coefficients may be transmitted in video data (e.g., the bitstream), and/or into an (e.g., one) adaptation parameter set (APS) network abstraction layer (nal) unit for a (e.g., each) class (630). An (e.g., one) APS nal unit may include numAlt filter sets (e.g., numAlt=4). Classes of a filter set may be grouped such that coefficients are the same for one or more (e.g., different) classes (e.g., and coding efficiency may be increased). The APS may be indexed with an apsld and/or altldx. At stage-2 as illustrated in FIG. 7B, the CTUs of the subsequent frames may re-use the coefficients of ALF (650) that were previously decoded from an APS (640). For a (e.g., each) CTU, the values { Apsld, altidx } may be signaled or inferred. The values {Apsld, altdx} may indicate which set of coefficients to use (650). A the scaling parameter of $K_{1,k}$ may be derived (660) and signaled (680) if re-scaling correction improves the BD-rate (670).

Classification-based post-filter re-scaling may be described herein.

One or more (e.g., several) scaling parameters may be provided. A (e.g., each) scaling value $K_k$ may be associated with a classification index (k). The classification index may be provided by (e.g., being given by) a classifier, which classifies a (e.g., each) reconstructed sample of the reconstructed picture (515). In examples, the classifier (CS) (525) may be similar to an (e.g., the same as one of the existing) ALF classifier (CF) (520), or similar to (e.g., the same as) the ALF classifier used for the current reconstructed sample. In examples, the classifier may be a neural network.

The correction (550) *Corr(x,y)* (e.g., which may be the difference between the reconstructed sample value and the post-filtered (e.g., obtained from the filter parameters at 530) reconstructed sample value), (537) may be scaled (540), with the scaling parameters (535) (e.g., $K_k$) associated with the class index (k) (e.g., eq. 2).

Examples of scaling parameters may be "scale" or "off" as depicted in the following equations:

$$\text{corr' = scale x corr} \qquad (a)$$

$$\text{corr' = corr + off} \qquad (b)$$

$$\text{corr' = } s_0 \text{ x corr + } s_1 \text{ x corr}^2 \qquad (c)$$

$$\text{corr' = } s_0 \text{ x corr + } o_0 \qquad (d)$$

$$\text{corr' = } s_0 \text{ x corr + } s_1 \text{ x corr}^2 + o_0 \qquad (e)$$

Equation (a) has a scale that may be equal to $K_k$:

$$\tilde{R}(x, y) = R(x, y) + K_k \cdot Corr(x, y) = R(x, y) + K_k \cdot \sum_{i=0}^{n} c_{k,i} f_i(x, y) \qquad (2)$$

The scaling parameters (e.g., or some of them) may be transmitted in video data (e.g., the bitstream) (560), or they may be known implicitly at the decoder. The scaling parameters may be signaled for a (e.g., each) {Apsld, altldx} used in the current slice (680). The scaling parameters may not be transmitted explicitly, but an index (e.g., scaling parameter correction index, such as idxCorr) referring to a pre-determined table (e.g., a lookup-table (LUT)) of scaling parameter values. An index value (e.g., a scaling parameter correction index, idxCorr=0) may correspond to not modifying the correction (e.g., a scale equal to 1 in case of equation (a)). In examples, pre-determined tables may be used.

The number of transmitted scaling parameter indexes may be inferior to the number of classes. Classes may be grouped together. A (e.g., one single) transmitted index may be associated with one or more (e.g., several) classes.

A flag (e.g., a scaling parameter reuse indication, such as usePrev) may be signaled (680) (e.g. in the slice header), to indicate that the {Apsld, altldx } re-uses a previous (e.g., in decoding order) value of a scaling parameter (e.g., which has been stored (645)). In examples, (e.g., by default) the scaling value may be initialized with a pre-determined value (e.g., idxCorrDef, where idxCorrDef = 0). If the flag (e.g., a scaling parameter reuse indication, such as usePrev) is true and/or no scaling value has been signaled, then the scaling value may be inferred (e.g., as idxCorrDef). The ALF filter may be applied (690).

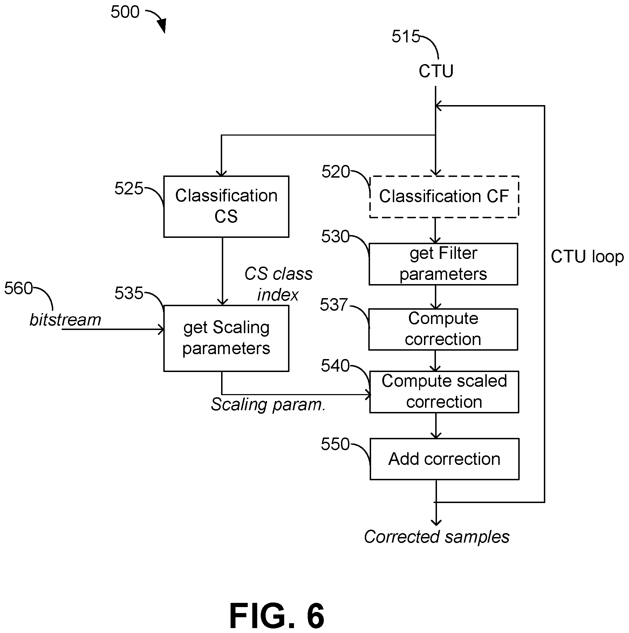

FIG. 6 is a flow diagram illustrating an example process 500 for classification-based scaling correction.

One or more (e.g. two) list(s) of pre-determined tables (e.g., LUTs) of scaling parameter values (e.g., quantized scaling values) may be provided (e.g., $S_{scale}$ = 3):

$$LUT_{1,0} = \{\, 8, 7, 6, 5, 9 \,\}$$

$$LUT_{1,1} = \{\, 8, 7, 6, 5, 4, 2, 9, 10, 12 \,\}$$

Classification-based post-filter re-scaling may be described herein.

In examples, the scaling correction may be derived at sub-pel precision. The correction may be stored at sub-pel precision.

$$\tilde{R}(x, y) - R(x, y) = \left( K_k \sum_{i=0}^{n} c_{k,i}^{\square} f_i(x, y) + off \right) \gg (S_{scale} + S_{ALF}) \qquad (3)$$

Where: off = 1 << ($S_{scale}$+$S_{ALF}$ - 1)

Optimal scaling of an ALF may be described herein.

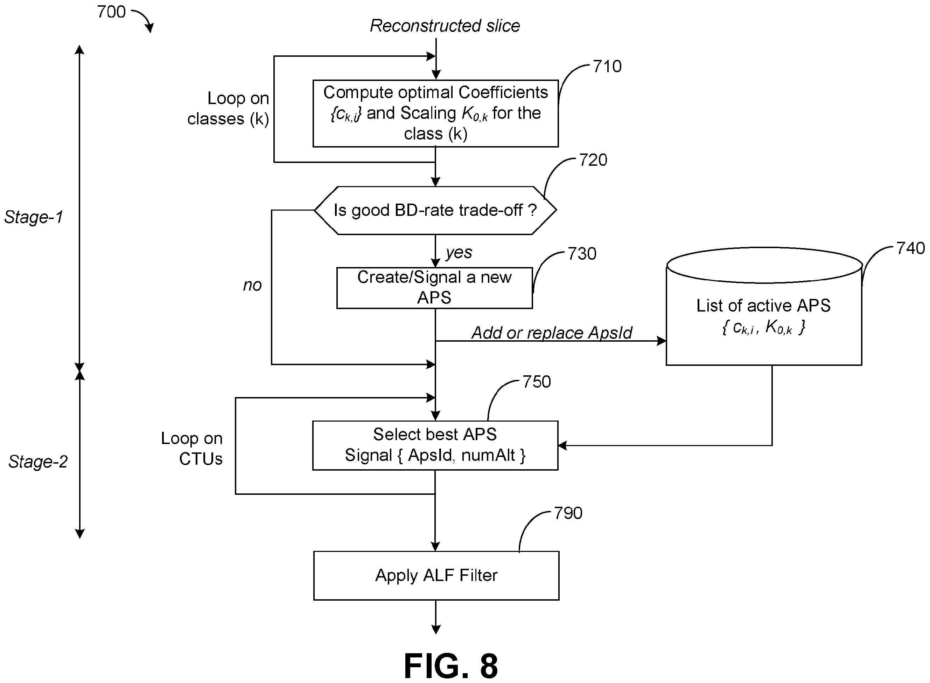

FIG. 8 is a flow diagram illustrating an example routine 700 of a stage derivation for ALF coefficients and/or scaling parameters. In examples, (e.g., at the encoder) the derivation of (e.g., both) scaling parameters $K_k=K_{0,k}$ and coefficients $\{ci\}_{i=0,...n}$ for the $k^{th}$ class may be generated (e.g., may be carried out together, at the same, stage-1 (710)), such that these values (e.g., the scaling parameters and/or coefficients) are optimal in terms of bit rate distortion criterion (BD-rate). An optimal derivation operation may be carried out at the creation of an (e.g., new) APS (730). If an APS improves the BD-rate (720), the values of $K_k$ may be signaled in an (e.g., new) APS nal unit (e.g., together) with the coefficients $P_k=\{c_{k,i}\}_{i=0,...n}$ (e.g., using idxCorr indexes and/or $LUT_0$, for a (e.g., each) class k) and/or may be stored (740). The stored values may be re-used for subsequent pictures (750) (e.g., eventually at stage-2). The ALF filter may be applied (790). In examples, classes may (e.g., still) be grouped (e.g., together) such that a fewer number of parameters $\{P_k, K_k\}$ than the number of classes (e.g., number max of classes = 25) may be signaled (e.g., eventually).

$$LUT_0 = \{\, \underline{16}, 17, \underline{18}, 19, 21, 23, 25, 27, 29, 15, \underline{14}, 13, \underline{12}, 11, \underline{10}, 9 \,\} \quad (S_{scale} = 4)$$

In examples, the underlined values may be the same as in $LUT_{1,0}$ or $LUT_{1,1}$.

In a second stage, for a (e.g., each of the) CTU(s) of the current slice, a device (e.g., the encoder) may select among the available (e.g., stored) list of active APS, the optimal (e.g., best) APS parameters { Apsld, altldx } that minimizes the BD-rate for the current CTU.

In examples, the scaling parameters may not be modified and/or adjusted for the subsequent images using the same APS.

Scaling of an ALF tailored to a DBF may be described herein.

In examples, a secondary classification may be used. The secondary classification may classify the samples as edge or non-edge. A pair of scaling parameters may be transmitted, $K_k = K_k^{edge}$, $K_k^{non-edge}\}$, where $K_k^{edge}$ may be selected for scaling the ALF correction of the reconstructed samples located at a CU or transform block (TU) boundary for the CS with class index "k", and $K_k^{non-edge}$ may be used if the reconstructed sample is not located at a CU or TU boundary for the CS with class index "k". In examples, at least two scaling factors may be signaled for an (e.g., each) ALF class of signaled filters (e.g., similar to classification-based post-filter re-scaling). In examples, the index k may indicate a first classification (e.g., the primary classification) and/or the { edge, non-edge } may indicate a second classification (e.g., the secondary classification).

Examples described here may derive the scaling parameters after the coefficients have been derived, which may be sub-optimal. The scaling factors may be adapted for the subsequent slices and/or pictures re-using the APS.

Examples described herein may derive the scaling parameters optimally (e.g., together with derivation of the coefficients). The (e.g., first) scaling factors may be stored in the APS, and/or the scaling value may not be adapted for the subsequent slices and/or pictures re-using the APS (e.g., because the scaling parameters are stored with APS parameters).

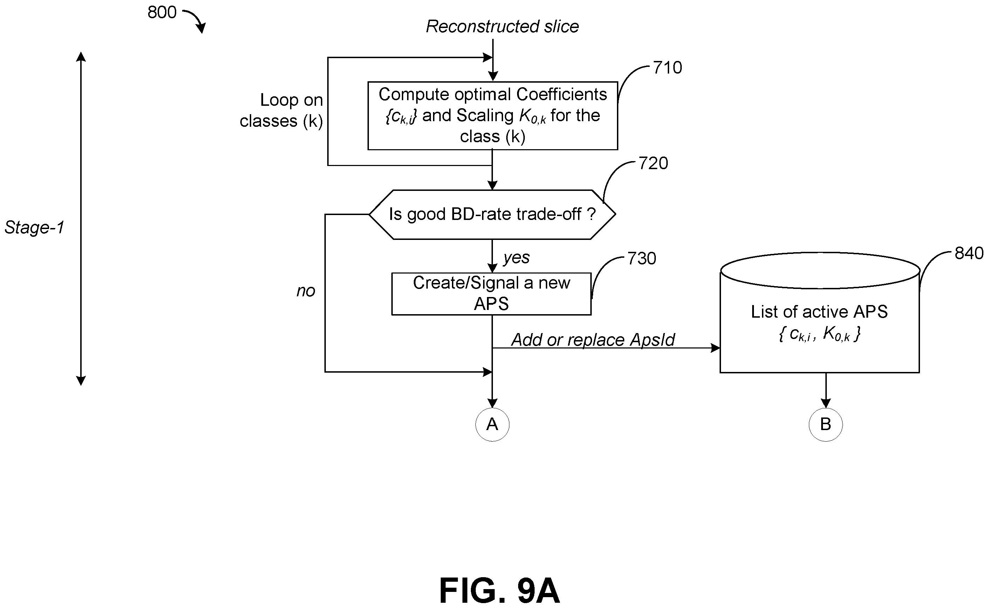

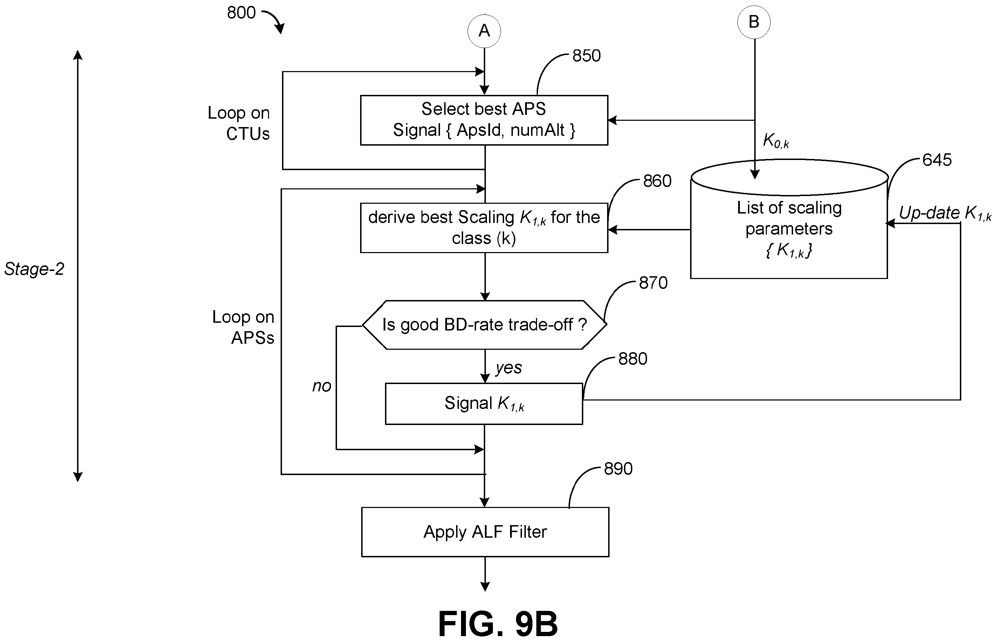

FIGS. 9A-9B are a flow diagram illustrating an example routine 800 for determining scaling parameters associated with an ALF. In examples, at least two techniques described herein may be combined. In examples, features described herein may initialize default scaling parameters with values derived at APS creation stage. In examples, features described herein may include combining scaling parameters (e.g., cascading scaling parameters). In examples, features described herein may include (e.g., mimic) cascading of scaling parameters with a (e.g., single) LUT. In examples, blocks 710, 720, and/or 730 may be similar to blocks described with reference to FIG 8.

Initializing default scaling parameters (e.g., with values derived at the APS creation stage) may be described herein. Scaling parameters may be derived (e.g., both) at the creation stage (e.g., stage-1) of the APS and/or if/when using APS (860) (e.g., eventually at stage-2), as illustrated in FIG.9A-9B. The scaling parameter $K_{1,k}$ (e.g., a second scaling parameter associated with stage-2) for the class may minimize the BD-rate (870). The second scaling parameters may be signaled in the slice or picture header (880) and/or in another nal unit (e.g., in case of picture or slice re-using an existing APS, such as an APS created and used previously with another picture or slice (840)).

At the stage-2, the list of scaling parameters $K_{1,k}$ (645) may be initialized (e.g., a default value) with scaling parameters derived at stage-1 (e.g., derived based on a first scaling parameter, such as $K_{0,k}$) (645). In examples, the scaling parameters values (e.g., first and/or second scaling parameter values) may be derived if/when the APS was created and/or stored (e.g., and/or if signaled in the APS). The value (e.g., the scaling parameter correction index, such as idxCorrDef) may correspond to the first scaling parameter value (e.g., $K_{0,k}$). If a flag (e.g., a scaling parameter reuse indication, such as usePrev) is true and/or no scaling value has been signaled yet (880), then the scaling value may be inferred to scaling parameter correction index (e.g., idxCorrDef).

The scaling shift value ($S_{scale}$) of the LUTs of the stages 1 and 2 may be set equal. For example, $S_{scale}=4$ and the $LUT_{1,0}$ and $LUT_{1,1}$ may be changed as follows:

$$LUT_{1,0} = \{ 16, 14, 12, 10, 18 \}$$

$$LUT_{1,1} = \{ 16, 14, 12, 10, 8, 4, 18, 20, 24 \}$$

In examples, (e.g., in the case of a secondary classification), one or more (e.g., several) lists of scaling parameters (e.g., two lists $K_k^{edge}, K_k^{non-edge}$ ) may be initialized.

Combining the scaling parameters (e.g., cascading scaling parameters) may be described herein (890). In examples, the scaling parameters derived at stage-2 (e.g., $K_{1,k}$) may be combined with the values derived at stage-1 (e.g., $K_{0,k}$) as follows (e.g., cascading scaling parameters):

$$K_k = K_{0,k} \cdot K_{1,k} \tag{4}$$

In examples, the value of $K_{1,k}$ may replace the previous value (e.g., the previous value at stage-2 may be updated based on an updated scaling parameter indication received in video data). If the value of $K_{1,k}$ replaces the previous value, then the scaling parameter may equal the second scaling parameter (e.g., $K_k = K_{1,k}$ where the second scaling parameter is determined based on the updated scaling parameter). In examples, if a flag (e.g., a scaling parameter reuse indication, such as usePrev) is true, and/or no scaling value has been signaled, then the scaling value may be inferred (e.g., to idxCorrDef), and/or $K_k = K_{0,k}$ (e.g., equivalent to cascading with $K_{1,k}$ equal to 1). In examples, the ALF correction may be scaled using eq. (3).

An example of (e.g., mimic cascading) cascading of scaling parameters with a (e.g., single) LUT may be described herein.

In examples, a (e.g., one single) set of quantized scaling values (e.g., $LUT_M$) may be used (e.g., $LUT_0$). To include (e.g., mimic) the cascading of the scaling parameters of stage-1 and stage-2, a second LUT (e.g., a secondary LUT, $sLUT_{idxCorr1}$) may be derived for a (e.g., each) value of a first index (e.g., idxCorr1), derived at stage-1 (e.g., an initial scaling parameter). If a second index (e.g., idxCorr2) is signaled at stage-2, the final scaling value may be derived as follows:

$$K_k = LUT_M[\, sLUT_{idxCorr1}[\, idxCorr2\, ]\, ] \tag{5}$$

For example, the second LUTs ( $sLUT_{idxCorr1}$ ) may be derived to produce an index for $LUT_M$ that may provide a scaling value close to cascading (e.g., may provide a value close to the value produced by cascading scaling parameters as described herein). A (e.g., one) sLUT may be produced for a (e.g., each) value of an index (e.g., for idxCorr1). For example:

$$(\, (\, LUT_M[\, sLUT_{idxCorr1}[\, idxCorr2\, ]\, ] + off) >> S_{scale}\, ) \approx (\, (\, LUT_1[_{idxCorr2}] \cdot LUT_0[_{idxCorr1}] + 2 \cdot off\, ) >> 2 \cdot S_{scale})$$

Where: off = 1 < ($S_{scale}$-1) or off = 0 for example

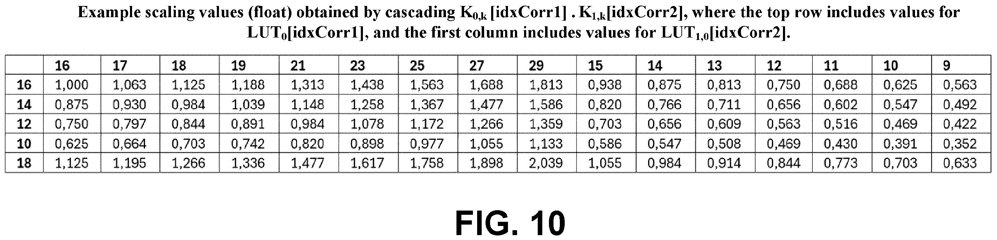

FIG. 10 is a table illustrating an example of the cascaded values (e.g., real numbers representing equation (4) cascaded values after shifting with $S_{scale}$) obtained with two indexes: idxCorr1 (e.g., top row is $LUT_0[idxCorr1]$), and idxCorr2 (e.g., left column is $LUT_{1,0}[idxCorr2]$) of stage-1 and stage-2 respectively.

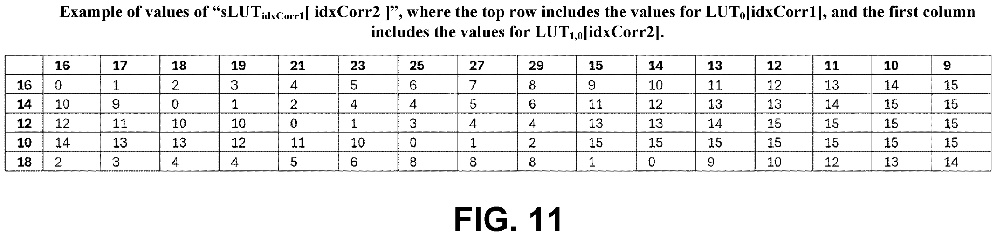

FIG. 11 is a table illustrating an example where each column depicts an example value of $sLUT_{idxCorr1}[idxCorr2]$ for a (e.g., given) example value of idxCorr1, and idxCorr2 is the index signaled at stage-2.

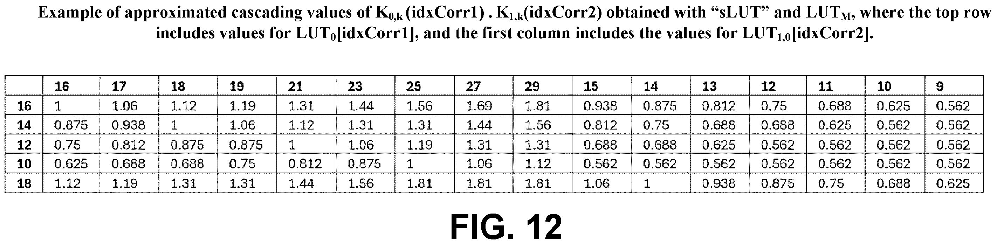

FIG. 12 illustrates an example table of approximated cascading values of $K_{0,k}(idxCorr1) \cdot K_{1,k}(i_{dxCorr2})$ that are obtained with example sLUT and example $LUT_M = LUT_0$ values. FIG. 12 illustrates the example values $LUT_0[sLUT_{idxCorr1}[idxCorr2]]$. The values in FIGS. 10 and 12 are very close.

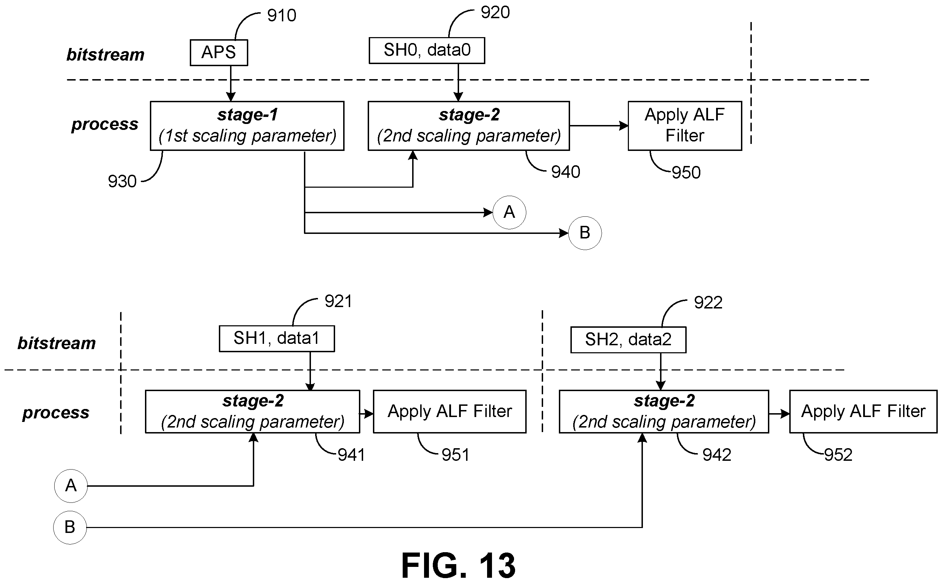

FIG. 13 is a flow diagram illustrating an example for decoding a bitstream with one or more (e.g., three) coded images (e.g., with a picture order count (POC) equal to 0,1, and 2). The APS packet (910) may be decoded. The APS packet (910) may include ALF parameters ($P_k$), ALF coefficients, and/or first scaling parameters ($K_{0,k}$) (e.g., which may be stored at stage-1 (930, and/or 640 of FIG. 7A)). Data (e.g., including (620) and/or signaled (680)) at the encoded slice-0 may be decoded. The data may include (e.g. data in the slice header SH0) the second scaling parameters (e.g., $K_{1,k}$). At stage-2 (940), the scaling parameter $K_k$ may be derived from $K_{0,k}$ and/or $K_{1,k}$ (e.g. by initializing and/or cascading the scaling parameters) and/or used (890) with equation (3) to filter the samples (950,890). The examples, as described herein (e.g., 920, 940, 950) may be applied for the subsequent slice/frames with POC=1 (921, 941, 951) and/or POC=2 (922, 942, 952).

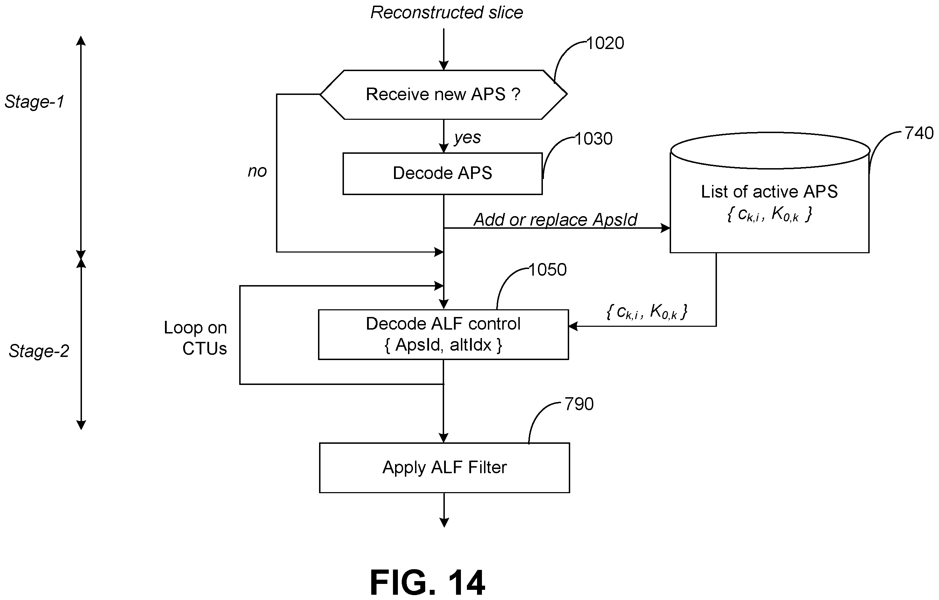

FIG. 14 is an flow diagram illustrating an example of a multiple stage derivation for ALF coefficients and/or scaling parameters for a decoder. The APS may be received (1020) and/or decoded (1030). If an APS is not received, then the ALF control { Apsid, altIdx } may be decoded (1050). The ApsId may be added and/or replaced (740). Coefficients and/or a scaling parameter may be retrieved (1050). The ALF filter may be applied (790).

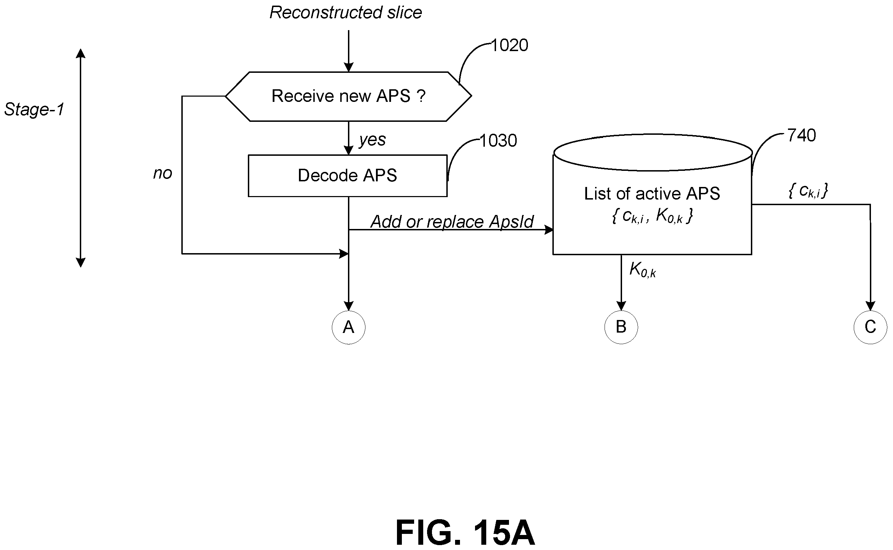

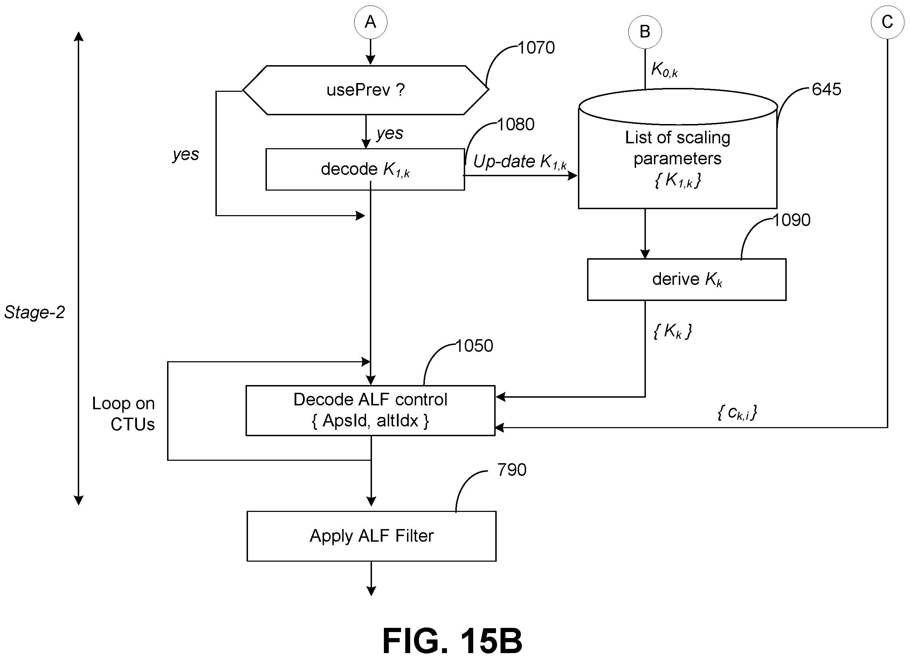

FIGS. 15A-15B are a flow diagram illustrating an example of determining scaling parameters associated with an ALF for a decoder. The APS may be received (1020) and/or decoded (1030). In examples, a decoder may receive a plurality of scaling parameters and/or a plurality of coefficients in an APS (1020). In examples, the first scaling parameter may be a scaling parameter of the plurality of scaling parameters in the APS. In examples, the correction may be determined based on at least one of the plurality of coefficients in the (e.g., new) APS. In examples, the decoder may determine to use a scaling parameter (e.g., a first, a second, and/or a combination of the first and/or second scaling parameters (e.g., cascading)) associated with an APS (1090). The decoder may set the second scaling parameter to a value of the first scaling parameter (645, 740). The first scaling parameter may be determined further based on an indication in the APS (1030). In examples, the decoder may determine that an updated scaling parameter has not been received in a previous slice header. In examples, based on the scaling parameter reuse indication and/or the determination that an updated scaling parameter has not been received, the decoder may set a first and/or second scaling parameter correction index to a default value. In examples, the first and/or second scaling parameter may be determined further based on the first and/or second scaling parameter correction index (1090).

A decoder may receive a scaling parameter reuse indication configured to indicate whether to reuse a plurality of previous scaling parameters (1070). If an APS is not received, then the device may determine whether a scaling parameter reuse indication indicates to reuse a plurality of previous scaling parameters (1070). In examples, an updated scaling parameter indication may indicate that the second scaling parameter is determined based on the updated scaling parameter indication and/or the first scaling parameter. In examples, the decoder may determine the second scaling parameter based on the updated scaling parameter indication.

If the scaling parameter reuse indication indicates a scaling parameter, then the second scaling parameter (e.g., $K_{1,k}$) may be decoded (1080). The first scaling parameter and/or the second scaling parameter may be stored (645, similar to 645 of FIGS 7A-7B).

A scaling parameter (e.g., a final scaling parameter, $K_k$) may be derived (1090). The ALF control values {Apsld, altIdx } may be decoded (1050) (e.g., based on the coefficients $\{c_{k,i}\}$ and/or scaling parameter $K_k$). The ALF filter may be applied (790).

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

i. Encoding, into coded video data, syntax elements that can enable the decoder to decode the coded video data, according to any of the embodiments described herein.

ii. Video data (e.g., a bitstream) that may include one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1.  A device for video decoding comprising:
    a processor configured to:

        determine a correction of a reconstructed picture sample;
        determine a classification associated with the reconstructed picture sample;
        based on the classification, determine a first scaling parameter;
        determine a second scaling parameter based on the first scaling parameter;
        generate a scaled correction based on the second scaling parameter and the correction; and
        apply the scaled correction to the reconstructed picture sample.

2. The device of claim 1, wherein the processor is further configured to:
receive a plurality of scaling parameters and a plurality of coefficients in an APS, wherein the first scaling parameter is a scaling parameter of the plurality of scaling parameters in the APS, and wherein the correction is determined based on at least one of the plurality of coefficients in the APS.

3. The device of claim 1, wherein the processor is further configured to:

receive a scaling parameter reuse indication configured to indicate whether to reuse a plurality of previous scaling parameters;
determine that an updated scaling parameter has not been received in a previous slice header; and
based on the scaling parameter reuse indication and the determination that an updated scaling parameter has not been received, set a second scaling parameter correction index to a default value, wherein the second scaling parameter is determined further based on the second scaling parameter correction index.

4. The device of any one of claims 1-3, wherein the processor is further configured to:

receive a scaling parameter reuse indication configured to indicate whether to reuse a plurality of previous scaling parameters;
determine that an updated scaling parameter has not been received in a previous slice header; and
based on the scaling parameter reuse indication and the determination that an updated scaling parameter has not been received, set a scaling parameter correction index to a default value, wherein the first scaling parameter is determined further based on the scaling parameter correction index.

5. The device of any one of claims 1-3, wherein the processor is further configured to:

determine to use a scaling parameter associated with an APS; and
set the second scaling parameter to a value of the first scaling parameter, wherein the first scaling parameter is determined further based on an indication in the APS.

6. The device of any one of claims 1-3, wherein the processor is further configured to:
receive, in video data, an updated scaling parameter indication, wherein the second scaling parameter is determined based on the updated scaling parameter indication and the first scaling parameter.

7. The device of any one of claims 1-3, wherein the processor is further configured to:

receive, in video data, an updated scaling parameter indication; and
determine an updated scaling parameter based on the updated scaling parameter indication, wherein the second scaling parameter is set to the updated scaling parameter.

8. A device for video encoding comprising:
a processor configured to:

determine a correction of a reconstructed picture sample;
determine a classification associated with the reconstructed picture sample;
determine a first scaling parameter based on the classification;
determine a second scaling parameter based on the first scaling parameter;
include, in video data, an indication of the second scaling parameter;
generate a scaled correction based on the second scaling parameter and the correction; and
apply the scaled correction to the reconstructed picture sample.

9. The device of claim 8, wherein the processor is further configured to:
derive a plurality of scaling parameters and a plurality of coefficients for an APS, wherein the first scaling parameter is a scaling parameter of the plurality of scaling parameters for the APS, and wherein the correction is determined based on at least one of the plurality of coefficients for the APS.

10. The device of claim 8, wherein the processor is further configured to:
include, in video data, a scaling parameter reuse indication configured to indicate whether to reuse a plurality of previous scaling parameters based on a determination to set a second scaling parameter correction index to a default value .

11. The device of any one of claims 8-10, wherein the processor is further configured to:
include, in video data, a scaling parameter reuse indication configured to indicate whether to reuse a plurality of previous scaling parameters based on a determination to set a scaling parameter correction index to a default value.

12. The device of any one of claims 8-10, wherein the processor is further configured to:

determine to set the second scaling parameter to a value of the first scaling parameter; and
send, in video data, an updated scaling parameter indication configured to indicate to use a scaling parameter based on the indication in the APS.

13. The device of any one of claims 8-10, wherein the processor is further configured to:
send, in video data, an updated scaling parameter indication, wherein the second scaling parameter is determined based on the updated scaling parameter indication and the first scaling parameter.

14. The device of any one of claims 8-10, wherein the processor is further configured to:

generate an updated scaling parameter indication, wherein the updated scaling parameter indication indicates that the second scaling parameter is set to an updated scaling parameter.
send, in video data, the updated scaling parameter indication.

15. The device of any one of claims 8-10, wherein the first scaling parameter or the second scaling parameter is determined further based on a location of the reconstructed picture sample.

**FIG. 1**

FIG. 2

CODED VIDEO BITSTREAM

330 ENTROPY DECODER

335 IMAGE PARTITIONER

340 INVERSE QUANTIZER

350 INVERSE TRANSFORMER

RECONSTRUCTED RESIDUAL BLOCKS

355 (+)

PREDICTION BLOCKS

RECONSTRUCTED BLOCKS

365 IN-LOOP FILTERS

RECONSTRUCTED VIDEO

360 INTRA PREDICTOR

380 REFERENCE PICTURE BUFFER

390 PREDICTION ENHANCER

370

375 MOTION COMPENSATOR

300

**FIG. 3**

415

CTU

400

420  classification

CTU
loop

430  get Filter
parameters

440  Compute
correction

450  Add correction

*Corrected samples*

# FIG. 4

Spatial Taps

Fixed-Filter-Output based Taps

Before DBF based
Taps

Residual
based Taps

**FIG. 5**

**FIG. 6**

EP 4 738 818 A1

600

*Reconstructed slice*

Loop on classes (k)

Compute optimal Coefficients $\{c_{k,i}\}$ for the class (k) — 610

Is good BD-rate trade-off ? — 620

no

yes

Create/Signal a new APS — 630

Add or replace ApsId

List of active APS $\{c_{k,i}\}$ — 640

Stage-1

A

$\{c_{k,i}\}$

B

# FIG. 7A

**FIG. 7B**

EP 4 738 818 A1

*Reconstructed slice*

**Stage-1**

Loop on
classes (k)

Compute optimal Coefficients
$\{c_{k,i}\}$ and Scaling $K_{0,k}$ for the
class (k) — 710

Is good BD-rate trade-off ? — 720

no

yes

Create/Signal a new
APS — 730

Add or replace ApsId

List of active APS
$\{\, c_{k,i}\,,\ K_{0,k}\,\}$ — 740

**Stage-2**

Loop on
CTUs

Select best APS
Signal { ApsId, numAlt } — 750

Apply ALF Filter — 790

700

# FIG. 8

800

*Stage-1*

Reconstructed slice

Loop on classes (k)

Compute optimal Coefficients $\{c_{k,i}\}$ and Scaling $K_{0,k}$ for the class (k) — 710

Is good BD-rate trade-off ? — 720

yes

no

Create/Signal a new APS — 730

Add or replace ApsId

List of active APS $\{ c_{k,i} , K_{0,k} \}$ — 840

A

B

**FIG. 9A**

800

A ⟲

Ⓐ

Ⓑ

850

Loop on
CTUs

Select best APS
Signal { ApsId, numAlt }

$K_{0,k}$

645

860

derive best Scaling $K_{1,k}$ for the
class (k)

List of scaling
parameters
{ $K_{1,k}$ }

Up-date $K_{1,k}$

Stage-2

Loop on
APSs

870

Is good BD-rate trade-off ?

no

yes

880

Signal $K_{1,k}$

890

Apply ALF Filter

**FIG. 9B**

Example scaling values (float) obtained by cascading $K_{0,k}$ [idxCorr1] . $K_{1,k}$[idxCorr2], where the top row includes values for $LUT_0$[idxCorr1], and the first column includes values for $LUT_{1,0}$[idxCorr2].

| | 16 | 17 | 18 | 19 | 21 | 23 | 25 | 27 | 29 | 15 | 14 | 13 | 12 | 11 | 10 | 9 |
|----|-------|-------|-------|-------|-------|-------|-------|-------|-------|-------|-------|-------|-------|-------|-------|-------|
| 16 | 1,000 | 1,063 | 1,125 | 1,188 | 1,313 | 1,438 | 1,563 | 1,688 | 1,813 | 0,938 | 0,875 | 0,813 | 0,750 | 0,688 | 0,625 | 0,563 |
| 14 | 0,875 | 0,930 | 0,984 | 1,039 | 1,148 | 1,258 | 1,367 | 1,477 | 1,586 | 0,820 | 0,766 | 0,711 | 0,656 | 0,602 | 0,547 | 0,492 |
| 12 | 0,750 | 0,797 | 0,844 | 0,891 | 0,984 | 1,078 | 1,172 | 1,266 | 1,359 | 0,703 | 0,656 | 0,609 | 0,563 | 0,516 | 0,469 | 0,422 |
| 10 | 0,625 | 0,664 | 0,703 | 0,742 | 0,820 | 0,898 | 0,977 | 1,055 | 1,133 | 0,586 | 0,547 | 0,508 | 0,469 | 0,430 | 0,391 | 0,352 |
| 18 | 1,125 | 1,195 | 1,266 | 1,336 | 1,477 | 1,617 | 1,758 | 1,898 | 2,039 | 1,055 | 0,984 | 0,914 | 0,844 | 0,773 | 0,703 | 0,633 |

# FIG. 10

EP 4 738 818 A1

Example of values of "$sLUT_{idxCorr1}[\ idxCorr2\ ]$", where the top row includes the values for $LUT_0[idxCorr1]$, and the first column includes the values for $LUT_{1,0}[idxCorr2]$.

| | 16 | 17 | 18 | 19 | 21 | 23 | 25 | 27 | 29 | 15 | 14 | 13 | 12 | 11 | 10 | 9 |
|---|---|---|---|---|---|---|---|---|---|---|---|---|---|---|---|---|
| 16 | 0 | 1 | 2 | 3 | 4 | 5 | 6 | 7 | 8 | 9 | 10 | 11 | 12 | 13 | 14 | 15 |
| 14 | 10 | 9 | 0 | 1 | 2 | 4 | 4 | 5 | 6 | 11 | 12 | 13 | 13 | 14 | 15 | 15 |
| 12 | 12 | 11 | 10 | 10 | 0 | 1 | 3 | 4 | 4 | 13 | 13 | 14 | 15 | 15 | 15 | 15 |
| 10 | 14 | 13 | 13 | 12 | 11 | 10 | 0 | 1 | 2 | 15 | 15 | 15 | 15 | 15 | 15 | 15 |
| 18 | 2 | 3 | 4 | 4 | 5 | 6 | 8 | 8 | 8 | 1 | 0 | 9 | 10 | 12 | 13 | 14 |

# FIG. 11

EP 4 738 818 A1

Example of approximated cascading values of $K_{0,k}$ (idxCorr1) . $K_{1,k}$(idxCorr2) obtained with "sLUT" and $LUT_M$, where the top row includes values for $LUT_0$[idxCorr1], and the first column includes the values for $LUT_{1,0}$[idxCorr2].

| | 16 | 17 | 18 | 19 | 21 | 23 | 25 | 27 | 29 | 15 | 14 | 13 | 12 | 11 | 10 | 9 |
|---|---|---|---|---|---|---|---|---|---|---|---|---|---|---|---|---|
| 16 | 1 | 1.06 | 1.12 | 1.19 | 1.31 | 1.44 | 1.56 | 1.69 | 1.81 | 0.938 | 0.875 | 0.812 | 0.75 | 0.688 | 0.625 | 0.562 |
| 14 | 0.875 | 0.938 | 1 | 1.06 | 1.12 | 1.31 | 1.31 | 1.44 | 1.56 | 0.812 | 0.75 | 0.688 | 0.688 | 0.625 | 0.562 | 0.562 |
| 12 | 0.75 | 0.812 | 0.875 | 0.875 | 1 | 1.06 | 1.19 | 1.31 | 1.31 | 0.688 | 0.688 | 0.625 | 0.562 | 0.562 | 0.562 | 0.562 |
| 10 | 0.625 | 0.688 | 0.688 | 0.75 | 0.812 | 0.875 | 1 | 1.06 | 1.12 | 0.562 | 0.562 | 0.562 | 0.562 | 0.562 | 0.562 | 0.562 |
| 18 | 1.12 | 1.19 | 1.31 | 1.31 | 1.44 | 1.56 | 1.81 | 1.81 | 1.81 | 1.06 | 1 | 0.938 | 0.875 | 0.75 | 0.688 | 0.625 |

# FIG. 12

FIG. 13

Reconstructed slice

Stage-1

Receive new APS ? — 1020

no

yes

Decode APS — 1030

Add or replace ApsId

List of active APS
$\{\, c_{k,i},\; K_{0,k}\, \}$ — 740

Loop on CTUs

Decode ALF control
$\{$ ApsId, altIdx $\}$ — 1050

$\{\, c_{k,i},\; K_{0,k}\, \}$

Stage-2

Apply ALF Filter — 790

**FIG. 14**

Reconstructed slice

Stage-1

Receive new APS ? 1020

yes

no

Decode APS 1030

Add or replace ApsId

List of active APS
$\{ c_{k,i}, K_{0,k} \}$ 740

$\{ c_{k,i} \}$

$K_{0,k}$

A

B

C

**FIG. 15A**

EP 4 738 818 A1

**FIG. 15B**

| | Europäisches Patentamt European Patent Office Office européen des brevets | **EUROPEAN SEARCH REPORT** | **Application Number** EP 24 30 6849 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BORDES (INTERDIGITAL) P ET AL: "EE2-5.2: ALF residuals scaling", 35. JVET MEETING; 20240712 - 20240719; SAPPORO; (THE JOINT VIDEO EXPLORATION TEAM OF ISO/IEC JTC1/SC29/WG11 AND ITU-T SG.16), , no. JVET-AI0084 11 July 2024 (2024-07-11), XP030320230, Retrieved from the Internet: URL:https://jvet-experts.org/doc_end_user/documents/35_Sapporo/wg11/JVET-AI0084-v3.zip JVET-AI0084-v3-clean.docx [retrieved on 2024-07-11] * the whole document * ----- | 1-15 | INV. H04N19/117 H04N19/82 |
| X | BORDES (INTERDIGITAL) P ET AL: "Non-EE2: ALF residuals scaling", 34. JVET MEETING; 20240417 - 20240424; RENNES; (THE JOINT VIDEO EXPLORATION TEAM OF ISO/IEC JTC1/SC29/WG11 AND ITU-T SG.16), , no. JVET-AH0170 ; m67261 10 April 2024 (2024-04-10), XP030317547, Retrieved from the Internet: URL:https://jvet-experts.org/doc_end_user/documents/34_Rennes/wg11/JVET-AH0170-v1.zip JVET-AH0170-v1.docx [retrieved on 2024-04-10] * the whole document * ----- | 1-15 | TECHNICAL FIELDS SEARCHED (IPC) H04N |

The present search report has been drawn up for all claims

| Place of search | Date of completion of the search | Examiner |
|---|---|---|
| Munich | 2 April 2025 | Cordara, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)